# EUROPEAN PATENT APPLICATION

(11) **EP 4 579 832 A1**
(43) Date of publication of application: **02.07.2025**
(21) Application number: 24184022.2
(22) Date of filing: 24.06.2024
(51) Int. Cl.: H01M 10/04, H01M 50/271, H01M 50/273, H01M 50/531, H01M 50/533

(54) **BATTERY MODULE AND METHOD FOR MANUFACTURING BATTERY MODULE**

(30) Priority: 26.12.2023 KR 20230191327
(71) Applicant: SAMSUNG SDI CO., LTD., Giheung-gu Yongin-si, Gyeonggi-do 17084 (KR)
(72) Inventor: Kang, Woong Jip, Suwon-si, Gyeonggi-do 16678 (KR); Kim, Sang Myeong, Suwon-si, Gyeonggi-do 16678 (KR)
(74) Representative: Gulde & Partner

(57) **Abstract**

Disclosed herein are a battery module including a busbar assembly including a busbar, a support film supporting the busbar, and a support plate supporting the support film, and a method for manufacturing the same. Specifically, the battery module includes: a plurality of battery cells arranged in a first direction and each including a cell case and a cell terminal protruding from the cell case; and a busbar assembly including a busbar allowing electrical connection between respective cell terminals of at least one pair of battery cells among the plurality of battery cells, a support film coupled to the busbar to support the busbar, and a support plate coupled to the support film to support the support film.

## Description

### Field of the Invention

The present invention relates to a battery module and a method for manufacturing a battery module.

### Description of the Related Art

In general, with rapidly increasing demand for portable electronics, such as laptops, video cameras, and mobile phones, and with commercialization of robots and electric vehicles, research on high-performance secondary batteries that can be repeatedly charged and discharged is actively underway.

Secondary batteries are widely used as an energy supply and storage component not only in small devices such as portable electronics, but also in medium and large devices such as electric vehicles and energy storage systems (ESS). In particular, for medium and large devices, there may be provided a battery module including a plurality of prismatic battery cells electrically connected to each other to enhance the output and/or capacity of a battery.

Such a battery module may include a plurality of battery cells, a plurality of busbars connecting respective cell terminals of the plurality of battery cells, a busbar holder supporting the plurality of busbars, and a side plate facing respective side surfaces of the plurality of battery cells.

The aforementioned information disclosed in this background section is merely for enhancement of understanding of the background technology of the present disclosure, and therefore may contain information that does not constitute the related art.

### Summary of the Invention

It is an aspect of the present invention to provide a battery module including a busbar assembly including a busbar, a support film supporting the busbar, and a support plate supporting the support film, and a method of manufacturing the same.

These and other aspects and features of the present disclosure will be described in or will be apparent from the following description of some embodiments of the present disclosure.

In accordance with one aspect of the present invention, a battery module includes: a plurality of battery cells arranged in a first direction and each including a cell case and a cell terminal protruding from the cell case; and a busbar assembly including a busbar allowing electrical connection between respective cell terminals of at least one pair of battery cells among the plurality of battery cells, a support film coupled to the busbar to support the busbar, and a support plate coupled to the support film to support the support film.

The support film may include: a first film layer for the busbar assembly; and a second film layer for the busbar assembly, wherein the second film layer is laid over the first film layer and located farther away from the plurality of battery cells than the first film layer.

The busbar and the support plate may be interposed between the first film layer and the second film layer.

The first film layer may be joined to the second film layer by hot pressing, and the busbar and the support plate may be coupled to the support film by a joint between the first film layer and the second film layer.

The support plate may be formed with a busbar window such that the support plate does not cover the busbar.

The first film layer may be formed with a cell terminal-contact window open to allow contact between the busbar and the cell terminals.

The second film layer may be formed with a welding window open to allow heat for welding the busbar to the cell terminals to be transferred to the busbar across the second film layer.

The busbar may be formed with a busbar guide pin hole into which a busbar guide pin is fitted to guide a position of the busbar relative to the support plate and the support film.

Each of the battery cells may include a pair of cell terminals, wherein the pair of cell terminals may protrude from the cell case in directions opposite to each other and intersecting a direction in which the plurality of the battery cells is arranged.

The busbar assembly may include a pair of busbar assemblies, wherein the pair of busbar assemblies may cover the cell terminals and may be spaced apart from each other with the plurality of battery cells placed therebetween.

The busbar may include: a first joining portion joined to the cell terminal of one battery cell among the plurality of battery cells; a second joining portion joined to the cell terminal of another battery cell among the plurality of battery cells; and an intermediate portion electrically connecting the first joining portion to the second joining portion and deformed before the first joining portion and the second joining portion when external force is applied to the busbar. The another battery cell may be adjacent to the one battery cell.

The battery module may further include: an end plate assembly covering an outermost battery cell among the plurality of battery cells, wherein the end plate assembly may include: a plurality of plate pieces spaced apart from each other; and a first film layer for the end plate assembly, the first film layer supporting the plurality of plate pieces; and a second film layer for the end plate assembly, the second film layer being laid over and joined to the first film layer with the plurality of plate pieces interposed between the first film layer and the second film layer.

In accordance with another aspect of the present invention, a method for manufacturing a battery module includes: manufacturing a busbar assembly including a busbar, a support film coupled to the busbar to support the busbar, and a support plate coupled to the support film to support the support film; arranging a plurality of battery cells each comprising a cell case and a cell terminal protruding from the cell case such that the cell terminals face the busbar; and joining the busbar to the cell terminals.

The support film may include: a first film layer for the busbar assembly and a second film layer for the busbar assembly, the second film layer being laid over the first film layer, and the busbar and the support plate may be interposed between the first film layer and the second film layer.

The step of manufacturing a busbar assembly may include: a first film layer setting step in which the first film layer is placed on a jig for the busbar assembly; a busbar setting step in which the busbar is placed on the first film layer; a support plate setting step in which the support plate is placed on the first film layer; a second film layer setting step in which the second film layer is placed on the jig to cover the first film layer, the busbar, and the support plate; and a film layer joining step in which the first film layer is joined to the second film layer to form a support film with the busbar and the support plate coupled thereto.

The first film layer may extend in a direction in which the plurality of battery cells is arranged, and the jig may include: a first guide pin blocking a longitudinal end of the first film layer in the first film layer setting step to prevent the first film layer from sliding with respect to the jig in a longitudinal direction of the first film layer; and a second guide pin blocking a transverse end of the first film layer in the first film layer setting step to prevent the first film layer from sliding with respect to the jig in a transverse direction of the first film layer.

The support plate may extend in a direction in which the plurality of battery cells is arranged, and the jig may further include: a third guide pin spaced apart from the first film layer and blocking a longitudinal end of the support plate in the support plate setting step to prevent the support plate from sliding with respect to the jig in a longitudinal direction of the support plate; and a fourth guide pin spaced apart from the first film layer and blocking a transverse end of the support plate in the support plate setting step to prevent the support plate from sliding with respect to the jig in a transverse direction of the support plate.

The busbar may be formed with a busbar guide pin hole, and the jig may further include: a busbar guide pin fitted into the busbar guide pin hole and passing through both the first film layer and the second film layer to allow the busbar to be locked in position with respect to the jig in the busbar setting step.

The method may further include: manufacturing an end plate assembly including a plurality of plate pieces spaced apart from each other, a first film layer for the end plate assembly, the first film layer supporting the plurality of plate pieces, and a second film layer for the end plate assembly, the second film layer being laid over and joined to the first film layer with the plurality of plate pieces interposed between the first film layer and the second film layer; and coupling the end plate assembly to the busbar assembly.

The step of manufacturing an end plate assembly may include: a first film layer setting step in which the first film layer is placed on a jig for the end plate assembly; a plate piece setting step in which the plurality of plate pieces is placed on the first film layer; a second film layer setting step in which the second film layer is placed on the jig to cover the first film layer and the plurality of plate pieces; and a film layer joining step in which the first film layer is joined to the second film layer to couple the plurality of plate pieces to the first film layer and the second film layer.

According to embodiments of the present invention, a battery module includes a busbar assembly including a busbar, a support film supporting the busbar, and a support plate supporting the support film. Thus, use of a busbar holder formed of a metal to support the busbar can be eliminated, thereby reducing costs associated therewith, improving assembly productivity, and allowing the battery module to be miniaturized and lightweight.

With the flexible support film supporting the busbar, the tolerance between the busbar and cell terminals for joining the busbar to the cell terminals can be increased. As a result, welding failure between the busbar and the cell terminals can be reduced and the yield of high-quality battery module products can be enhanced.

However, aspects and features of the present invention are not limited to those described above and other aspects and features not mentioned will be clearly understood by those skilled in the art from the detailed description given below.

### Brief Description of Drawings

The following drawings attached to this specification illustrate embodiments of the present invention, and further describe aspects and features of the present invention together with the detailed description of the present invention. Thus, the present invention should not be construed as being limited to the drawings:
FIG. 1 is a perspective view of a battery module according to a first embodiment of the present invention;
FIG. 2 is a perspective view of a plurality of battery cells of FIG. 1;
FIG. 3 is an outside perspective view of a busbar assembly of FIG. 1;
FIG. 4 is an inside perspective view of the busbar assembly of FIG. 1;
FIG. 5 is a top exploded perspective view of the busbar assembly of FIG. 3;
FIG. 6 is a bottom exploded perspective view of the busbar assembly of FIG. 3;
FIG. 7 is a plan view of a busbar of FIG. 5;
FIG. 8 is a perspective view of a battery module according to a second embodiment of the present invention;
FIG. 9 is an inside perspective view of an end plate assembly of FIG. 8;
FIG. 10 is a top exploded perspective view of the end plate assembly of FIG. 8;
FIG. 11 is a bottom exploded perspective view of the end plate assembly of FIG. 8;
FIG. 12 is a flowchart of a battery module manufacturing method according to one embodiment of the present invention;
FIG. 13 is a flowchart of one embodiment of a busbar assembly manufacturing step of FIG. 12;
FIG. 14 is a perspective view of an example of a jig used in the busbar assembly manufacturing step of FIG. 12;
FIG. 15 is a perspective view of the jig of FIG. 14, with a first film layer for a busbar assembly placed thereon;
FIG. 16 is an enlarged plan view of portion XVI of FIG. 15;
FIG. 17 is a perspective view of the jig of FIG. 14, with the first film layer for the busbar assembly, a busbar, and a support plate placed thereon;
FIG. 18 is an enlarged plan view of portion XIIX of FIG. 17;
FIG. 19 is a perspective view of the jig of FIG. 14, with the first film layer for the busbar assembly, the busbar, the support plate, and a second film layer for the busbar assembly placed thereon;
FIG. 20 is a perspective view of the jig of FIG. 19, with the first film layer for the busbar assembly joined to the second film layer for the busbar assembly by heat pressing;
FIG. 21 is a flowchart of one embodiment of an end plate assembly manufacturing step of FIG. 12;
FIG. 22 is a perspective view of a jig used in the end plate assembly manufacturing step of FIG. 21;
FIG. 23 is a plan view of the jig of FIG. 22, with a first film layer for an end plate assembly placed thereon;
FIG. 24 is a plan view of the jig of FIG. 22, with the first film layer for the end plate assembly and an end plate placed thereon;
FIG. 25 is a plan view of the jig of FIG. 22, with the first film layer for the end plate assembly, the end plate, and a second film layer for the end plate assembly placed thereon; and
FIG. 26 is a plan view of the jig of FIG. 2, with first film layer for the end plate assembly and the second film layer for the end plate assembly placed thereon and joined to each other by heat pressing.

### Detailed Description of the Invention

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

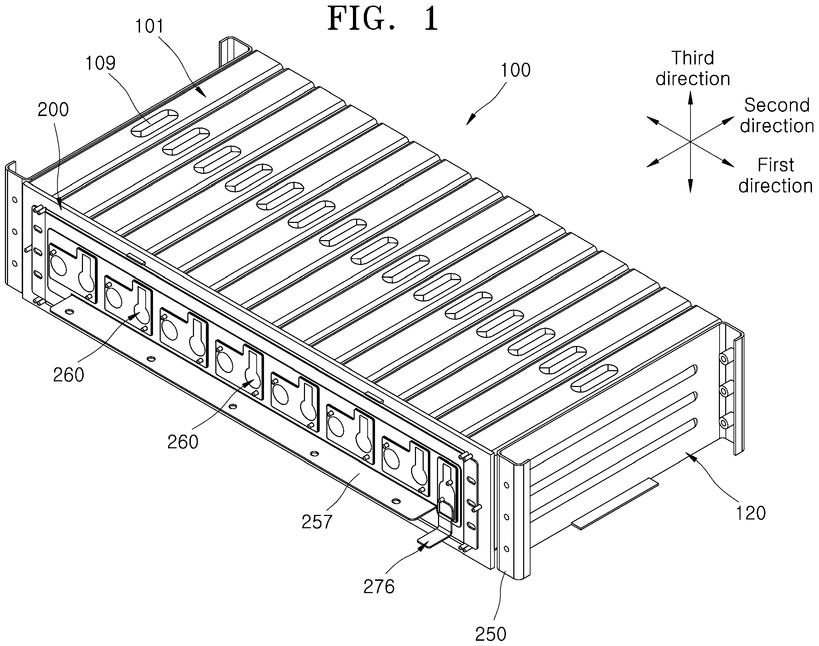

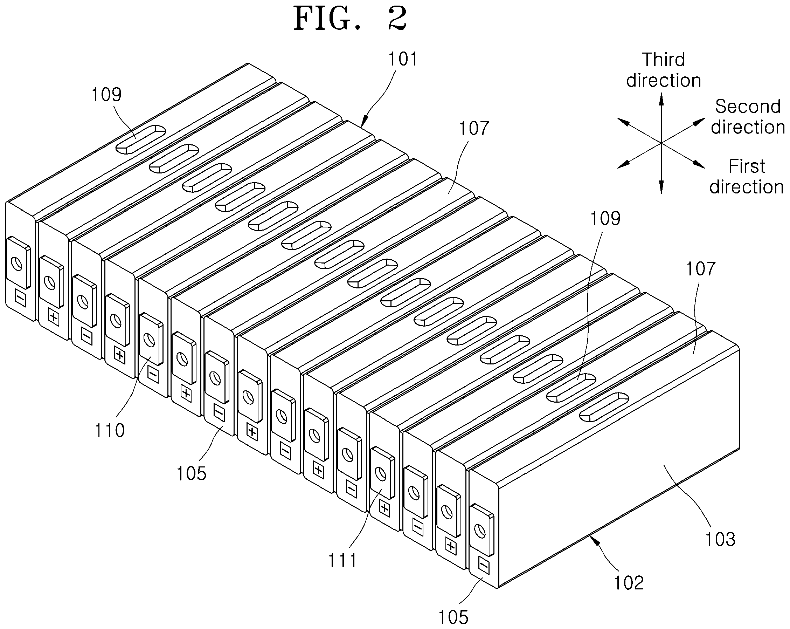

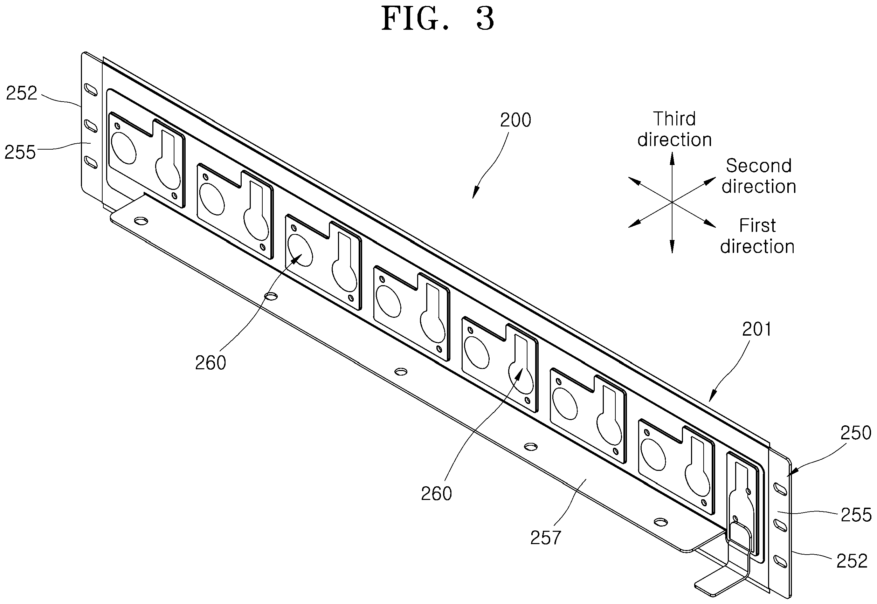

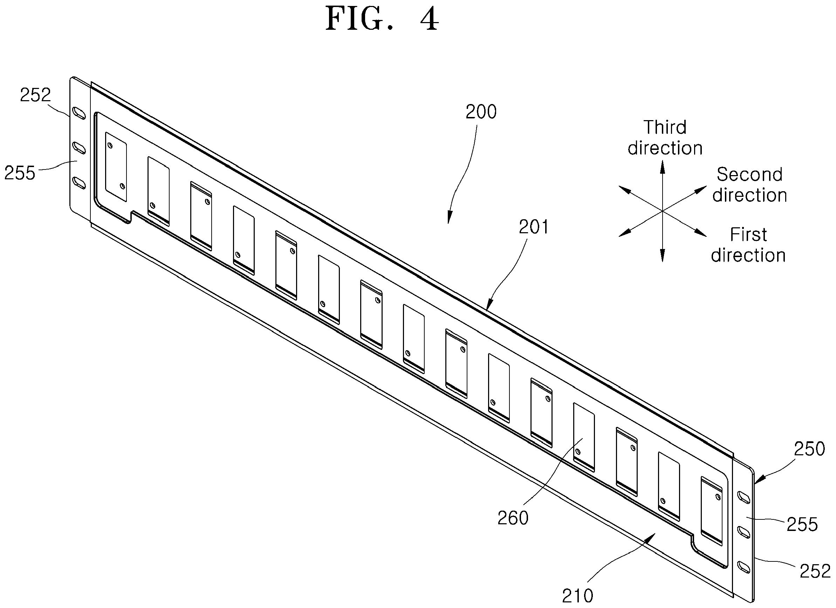

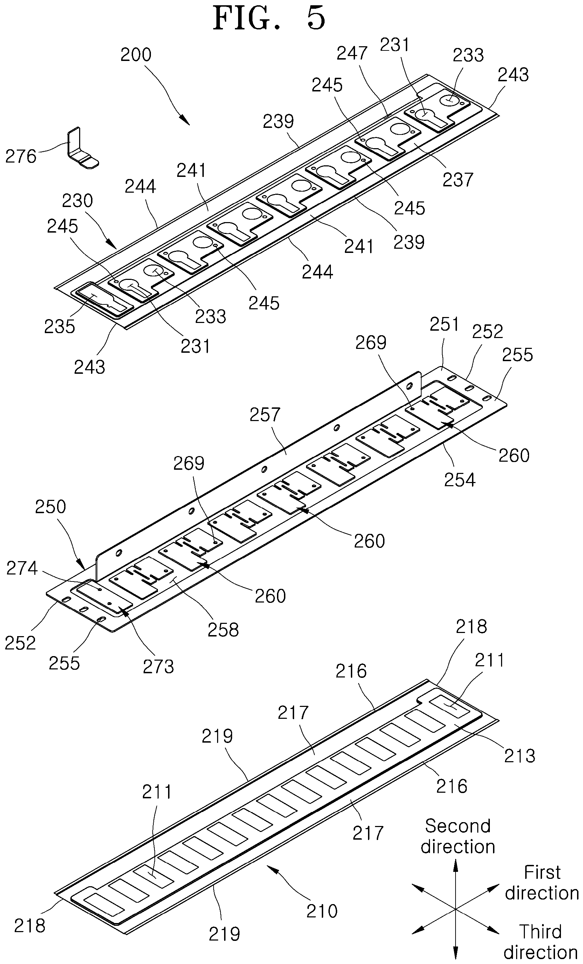

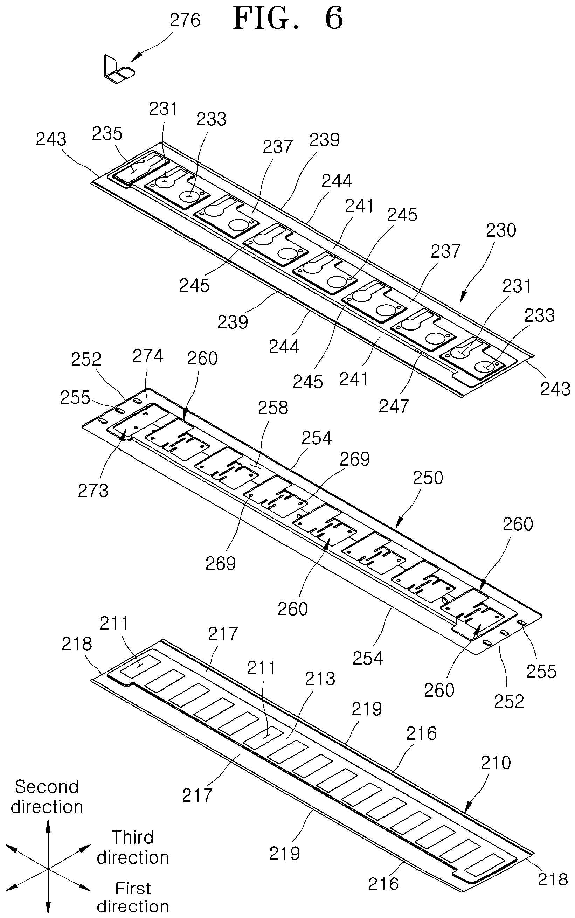

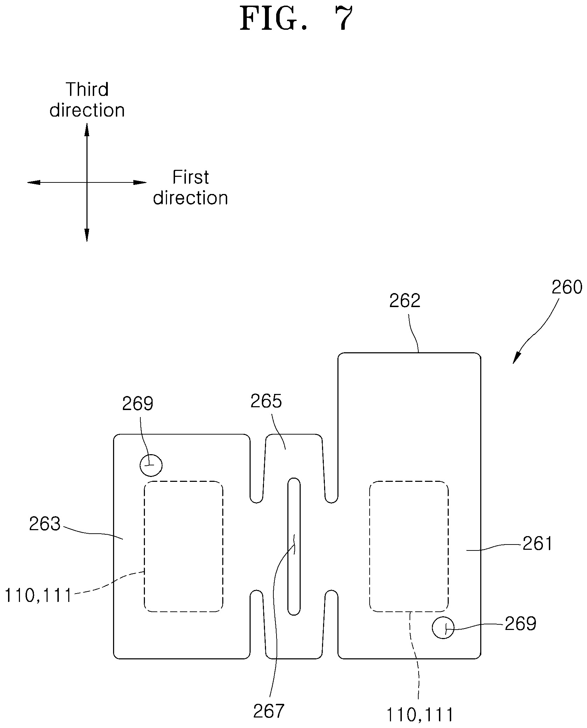

FIG. 1 is a perspective view of a battery module according to a first embodiment of the present invention; FIG. 2 is a perspective view of a plurality of battery cells of FIG. 1; FIG. 3 is an outside perspective view of a busbar assembly of FIG. 1; FIG. 4 is an inside perspective view of the busbar assembly of FIG. 1; FIG. 5 is a top exploded perspective view of the busbar assembly of FIG. 3; FIG. 6 is a bottom exploded perspective view of the busbar assembly of FIG. 3; and FIG. 7 is a plan view of a busbar of FIG. 5.

Referring to FIG. 1 to FIG. 7, a battery module 100 according to a first embodiment of the present invention includes a plurality of battery cells 101 and a busbar assembly 200. The plurality of battery cells 101 is arranged in one direction. Here, the one direction may be a first direction.

The battery cell 101 is a chargeable/dischargeable secondary battery cell and includes a cell case and a cell terminal 110, 111. The battery cell 101 may be a so-called "side-type prismatic battery cell", wherein a pair of cell terminals 110, 111 joined to a busbar 260, 273, that is, negative and positive cell terminals 110, 111, is disposed at opposite sides of the cell case 102, respectively.

The cell case 102 may be formed of, for example, a metal, such as an aluminum alloy, and may have a generally cuboidal shape. The cell case 102 may include: a cell can having a pair of openings formed at opposite sides thereof in a second direction orthogonal to the first direction; and a pair of cap plates closing the pair of openings of the cell can. The negative cell terminal 110 may protrude from one of the pair of cap plates, and the positive cell terminal 111 may protrude from the other of the pair of cap plates.

An electrode assembly (not shown) may be received in the cell case 102. The electrode assembly may be formed by winding or piling up a stack of a first electrode plate, a separator, and a second electrode plate each formed as a thin plate or film.

When the electrode assembly is a wound stack, a winding axis may be parallel to a longitudinal direction of the cell case 102. Here, the longitudinal direction of the cell case 102 may be parallel to the second direction. However, the shape of the electrode assembly is not particularly restricted in the present invention and the electrode assembly may be a stack-type electrode assembly rather than a wound electrode assembly.

The electrode assembly may be a Z-stack electrode assembly in which a positive electrode plate and a negative electrode plate are inserted into opposite sides of a separator bent in a "Z" shape. In addition, one or more electrode assemblies stacked one above another with long sides thereof adjoining each other may be received in the cell case. However, the number of electrode assemblies is not particularly restricted in the present invention. The first electrode plate of the electrode assembly may serve as a negative electrode and the second electrode plate of the electrode assembly may serve as a positive electrode. Of course, the reverse is also possible.

The first electrode plate may be formed by applying a first electrode active material, such as graphite or carbon, to a first electrode collector plate formed of a metal foil, such as copper, a copper alloy, nickel, or a nickel alloy, and may include a first electrode tab (or a first uncoated portion), which is a region not coated with the first electrode active material. The first electrode tab may provide a path for the flow of electric current between the first electrode plate and a first current collector. In some embodiments, the first electrode tab may be formed by cutting the first electrode plate in advance during manufacture of the first electrode plate such that a portion of the first electrode plate protrudes from one side of the electrode assembly beyond the separator without additional cutting.

The second electrode plate may be formed by applying a second electrode active material, such as a transition metal oxide, to a second electrode collector plate formed of a metal foil, such as aluminum or an aluminum alloy, and may include a second electrode tab (or second uncoated portion), which is a region not coated with the second electrode active material. The second electrode tab may provide a path for the flow of electric current between the second electrode plate and a second collector. In some embodiments, the second electrode tab may be formed by cutting the second electrode plate in advance during manufacture of the second electrode plate such that a portion of the second electrode plate protrudes from the other side of the electrode assembly beyond the separator without additional cutting.

The first electrode tab may be electrically connected to the negative cell terminal 110 inside the cell case 102, and the second electrode tab may be electrically connected to the positive cell terminal 111 inside the cell case 102.

The cell case 102 may include a pair of first surfaces 103, a pair of second surfaces 105, and a pair of third surfaces 107. The pair of first surfaces 103 is a pair of flat surfaces orthogonal to the first direction and is spaced apart from each other. The pair of second surfaces 105 is a pair of flat surfaces orthogonal to the second direction and is spaced apart from each other. The pair of third surfaces 103 is a pair of flat surfaces orthogonal to a third direction and is spaced apart from each other. Herein, the third direction is defined as a direction orthogonal to the first direction and the second direction.

The pair of first faces 103, the pair of second faces 105, and the pair of third faces 107 may define an interior space of the cell case 102 in which the electrode assembly is received. The pair of cell terminals 110, 111 may protrude from the pair of the second faces 105, respectively, in the second direction. A pair of cell terminals 110, 111 of one battery cell 101 may protrude in opposite directions. The negative cell terminal 110 and the positive cell terminal 111 may be alternately arranged in the first direction.

The third surface 107 may be provided with a cell vent 109. The cell vent 109 may rupture upon generation of hot gases and flaming debris inside the cell case 102 due to overcharging, abnormal operation, or the like to allow emissions including the hot gases, the flaming debris, and the like to be discharged from the cell case 102 therethrough.

For example, the first direction is a direction in which the plurality of battery cells 101 is arranged in a row, and may be a forward/rearward direction of the battery module 100. The second direction is a direction orthogonal to the first direction and may be a rightward/leftward direction of the battery module 100. In addition, the second direction may be a longitudinal direction of the battery cell 101 or the cell case 102. The third direction is a direction orthogonal to the first direction and the second direction and may be an upward/downward direction of the battery module 100.

The busbar assembly 200 includes a busbar 260, 273, 276, a support film 201, and a support plate 250. The battery module 100 may include a pair of busbar assemblies 200. The pair of busbar assemblies 200 may be spaced apart from each other with the plurality of battery cells 101 placed therebetween and may cover the plurality of cell terminals 110, 111.

Specifically, one of the pair of busbar assemblies 200 may face a plurality of cell terminals 110, 111 arranged at a left side of the plurality of battery cells 101, and the other of the pair of busbar assemblies 200 may face a plurality of cell terminals 110, 111 arranged at the right side of the plurality of battery cells 101.

The busbar 260, 273, 276 may include an inter-cell busbar 260, an intermediate busbar 273, and an inter-module busbar 276. The inter-cell busbar 260 may electrically connect one cell terminal 110 or 111 of one of a pair of adjacent battery cells 101 among the plurality of battery cells 101 to one cell terminal 111 or 110 of the other of the pair of adjacent battery cells 101.

The inter-cell busbar 260 may include a first joining portion 261, a second joining portion 263, and an intermediate portion 265. The inter-cell busbar 260 may be a plate-like member formed of a metal. The first joining portion 261, the second joining portion 263, and the intermediate portion 265 may be integrally formed with one another.

The first joining portion 261 may be joined to one cell terminal 110 or 111 of one battery cell 101 among the plurality of battery cells 101. The second joining portion 263 may be joined to one cell terminal 111 or 110 of another battery cell 101 adjacent to the one battery cell 101. The cell terminal 110 or 111 joined to the first joining portion 261 may be adjacent to the cell terminal 111 or 110 joined to the second joining portion 263 in the first direction.

The intermediate portion 265 may electrically connect the first joining portion 261 to the second joining portion 263. When external force is applied to the inter-cell busbar 260, the intermediate portion 265 may be deformed before the first joining portion 261 and the second joining portion 263 are deformed. For example, the intermediate portion 265 may have a slit 367 formed therethrough in a thickness direction thereof and extending in one direction. For example, the slit 367 may extend in the third direction. However, even without the slit 269, the intermediate portion 265 may be deformed before the first joining portion 261 and the second joining portion 263 by having a smaller thickness than both the first joining portion 261 and the second joining portion 263.

As a result, even when the cell terminal 110 or 111 joined to the first joining portion 261 has a different coordinate position in the second direction than the cell terminal 111 or 110 joined to the second joining portion 263, the intermediate portion 265 may be bent such that each of the first joining portion 261 and the second joining portion 263 is brought into close contact with a corresponding one of the cell terminals 110, 111 with internal stress thereof minimized.

A length of the first joining portion 261 in the third direction may be greater than that of the second joining portion 263. The first joining portion 261 may be connected at an end thereof in the third direction to a sensor that detects and measures a value indicative of the state of the battery module 100, such as voltage or temperature, during charging/discharging of the battery module 100.

A planar area of the inter-cell busbar 260 may be four to five times that of one cell terminal 110 or 111 joined to the inter-cell busbar 260. If the planar area of the inter-cell busbar 260 is less than four times that of the one cell terminal 110 or 111, the inter-cell busbar 260 can be overheated during high-voltage charging/discharging. If the planar area of the inter-cell busbar 260 exceeds five times that of the one cell terminal 110 or 111, the battery module 100 can become unnecessarily heavy and manufacturing cost can increase.

A plurality of battery modules 100 may be incorporated into a battery pack (not shown). The inter-module busbar 276 may electrically connect one battery module 100 in the battery pack to another battery module 100 adjacent thereto, or may electrically connect the battery module 100 to a battery pack control unit (not shown).

The intermediate busbar 273 electrically connects one of the plurality of battery cells 101 in the battery module 100 to the inter-module busbar 276. The intermediate busbar 273 may have a shape of a generally rectangular plate. The intermediate busbar 273 may be joined at one side thereof to the cell terminals 110, 111 and may be joined at the other side thereof to the inter-module busbar 276.

The support film 201 is coupled to the inter-cell busbar 260 to support the inter-cell busbar 260. The support film 201 may also support the intermediate busbar 273 along with a plurality of inter-cell busbars 260. The support plate 250 is coupled to the support film 201 to support the support film 201.

The support film 201 may include a first film layer 210 for the busbar assembly 200 and a second film layer 230 for the busbar assembly 200, wherein the second film layer 230 for the busbar assembly 200 is laid over the first film layer 210 for the busbar assembly 200 and is located farther away from the plurality of battery cells 101 than the first film layer 210 for the busbar assembly 200. The first film layer 210 for the busbar assembly 200 and the second film layer 230 for the busbar assembly 200 may be formed of, for example, polyethylene terephthalate (PET). A plurality of inter-cell busbars 260, one intermediate busbar 273, and one support plate 250 may be interposed between the first film layer 210 for the busbar assembly 200 and the second film layer 230 for the busbar assembly 200.

The support plate 250 may be formed of, for example, a metal, such as an aluminum alloy. The support plate 250 may include a rectangular frame 251 and a flange 257. The rectangular frame 251 may have a shape of a generally rectangular plate and may be formed at a center thereof with a busbar window 258. A plurality of inter-cell busbars 260 and one intermediate busbar 273 may be disposed in a region opened by the busbar window 258, such that the support plate 250 does not cover or overlap these busbars 260, 273.

The flange 257 may protrude from the rectangular frame 251 in the second direction and may extend in the first direction. The flange 257 may be coupled and secured to a case (not shown) of the battery pack (not shown).

The first film layer 210 for the busbar assembly 200 may be formed with a plurality of cell terminal-contact windows 211 open to establish contact between a plurality of cell terminals 110, 111 and the busbar 260, 273, for example, a plurality of inter-cell busbars 260 and one intermediate busbar 273. The plurality of cell terminal-contact windows 211 may be spaced apart from each other in the first direction.

The second film layer 230 for the busbar assembly 200 may be formed with a plurality of welding windows 231, 233, 235. The plurality of welding windows 231, 233, 235 may include a first welding window 231, a second welding window 233, and a third welding window 235. The first welding window 231 allows energy for welding one first joining portion 261 to one cell terminal 110 or 111 to be transferred to the one first joining portion 261 across the second film layer 230 for the busbar assembly 200.

The second welding window 233 allows energy for welding one second joining portion 263 to one cell terminal 111 or 110 to be transferred to the one second joining portion 263 across the second film layer 230 for the busbar assembly 200. The first welding window 231 allows energy for welding a sensor (not shown) detecting the state of the battery module 100 to a sensor joining portion 262 to be transferred to the sensor joining portion 262 across the second film layer 230 for the busbar assembly 200. As the first joining portion 261 has a greater length than the second joining portion 263, the first welding window 231 may have a greater length than the second welding window 233.

For example, laser welding may be used for welding between the inter-cell busbar 260 and the cell terminals 110, 111, between the intermediate busbar 273 and the cell terminals 110, 111, and between the intermediate busbar 273 and the inter-module busbar 276. However, the present invention is not limited thereto and various other welding techniques, such as ultrasonic welding or electrical resistance welding, may be used.

The first film layer 210 for the busbar assembly 200 and the second film layer 230 for the busbar assembly 200 may be joined to each other by hot pressing. The plurality of inter-cell busbars 260, the intermediate busbar 273, and the support plate 250 may be coupled to the support film 201 by a joint between the first film layer 210 for the busbar assembly 200 and the second film layer 230 for the busbar assembly 200.

For example, the first film layer 210 for the busbar assembly 200 may be formed with a peri-busbar joining portion 213 in a region thereof around the inter-cell busbars 260 and the intermediate busbar 273 and the second film layer 230 for the busbar assembly 200 may have a peri-busbar joining portion 237 in a region thereof around the inter-cell busbars 260 and the intermediate busbar 273, wherein the peri-busbar joining portions 213, 237 are joined to each other by hot pressing.

Since the plurality of inter-cell busbars 260 and the intermediate busbar 273 are enclosed by the peri-busbar joining portions 213, 237, the plurality of inter-cell busbars 260 and the intermediate busbar 273 can be prevented from being separated or detached from the support film 201 or from being out of place or out of position on the support film 201.

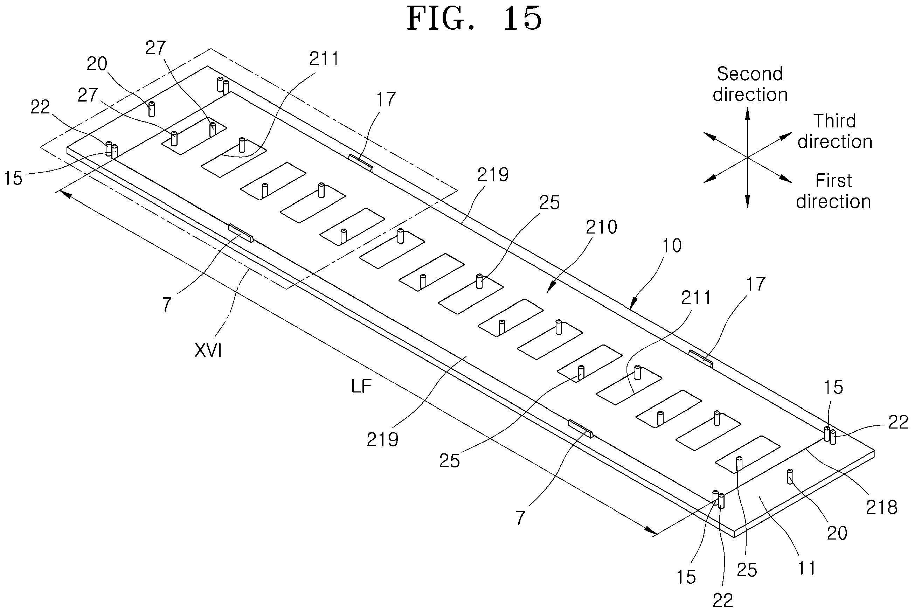

Each of the first film layer 210 for the busbar assembly 200 and the second film layer 230 for the busbar assembly 200 may have a generally rectangular planar shape and may have the same size. The first film layer for the busbar assembly 210 and the second film layer for the busbar assembly 230 may extend in the first direction. A distance LF (see FIG. 15) between opposite longitudinal ends 218 of the first film layer for the busbar assembly 210 and a distance between opposite longitudinal ends 243 of the second film layer for the busbar assembly 230 may each be equal to a length of the support film 201. That is, the length LF of the first film layer 210 for the busbar assembly 200, the length of the second film layer 230 for the busbar assembly 200, and the length of the support film 201 may be equal to one another.

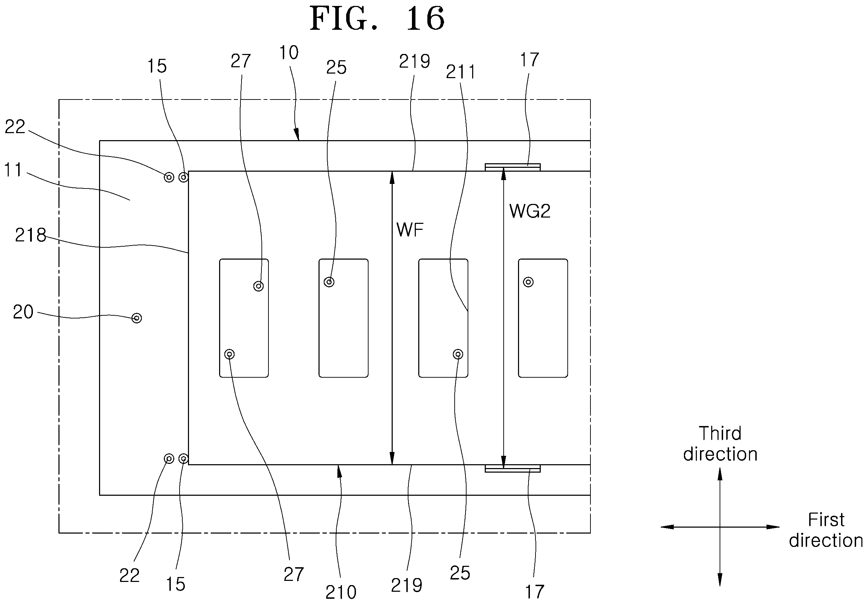

A distance WF (see FIG. 16) between opposite transverse ends 219 of the first film layer 210 for the busbar assembly 200 and a distance between opposite transverse ends 244 of the second film layer 230 for the busbar assembly 200 may each be equal to a width of the support film 201. That is, the width WF of the first film layer 210 for the busbar assembly 200, the width of the second film layer 230 for the busbar assembly 200, and the width of the support film 201 may be equal to one another. Here, the transverse direction of each of the first film layer 210 for the busbar assembly 200 and the second film layer 230 for the busbar assembly 200 may correspond to the third direction.

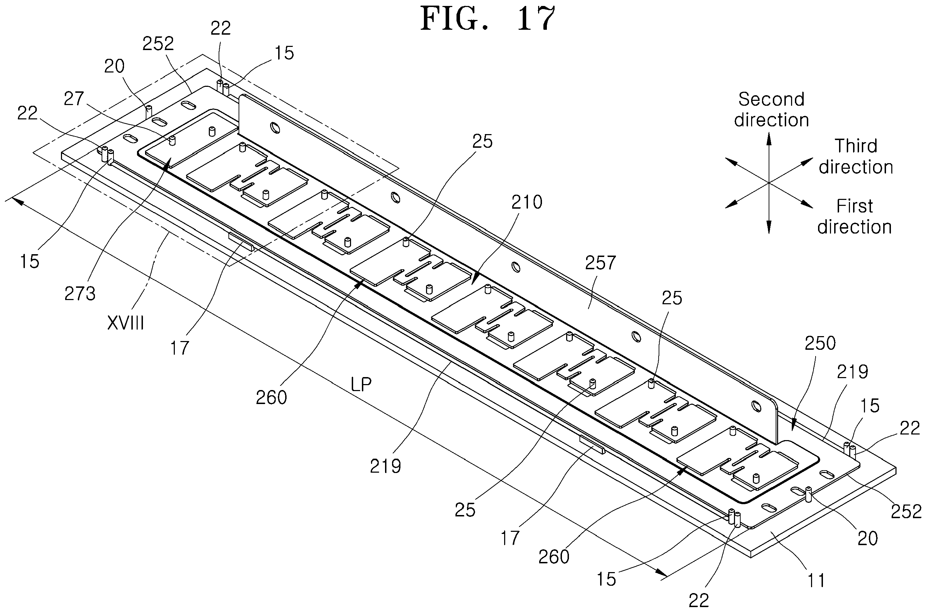

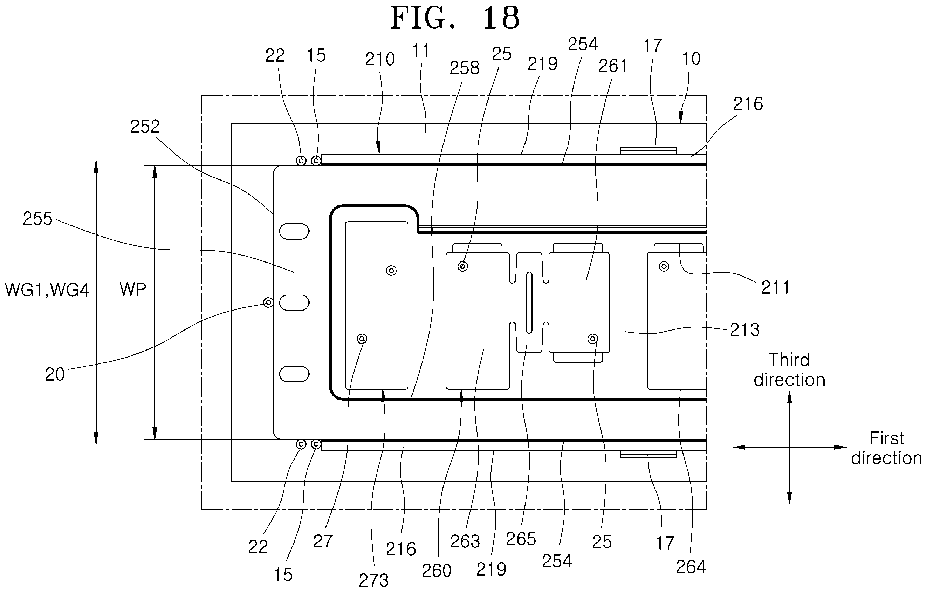

The rectangular frame 251 of the support plate 250 extends in the first direction. A distance LP (see FIG. 17) between opposite longitudinal ends 252 of the support plate 250, that is, a length LP of the support plate 250, may be greater than the length LF of the support film 201. A distance WP (see FIG. 18) between opposite transverse ends 254 of the rectangular frame 251, that is, a width WP of the support plate 250, may be smaller than the width WF of the support film 201.

Since the width WF of the support film 201 is greater than the width WP of the support plate 250, the first film layer 210 for the busbar assembly 200 may be formed with a peripheral joining portion 216 formed in a region thereof close to a transverse end 219 thereof and the second film layer 230 for the busbar assembly 200 may be formed with a peripheral joining portion 239 formed in a region thereof close to a transverse end 244 thereof, wherein the peripheral joining portions 216, 239 are joined to each other by hot pressing. The first film layer 210 for the busbar assembly 200 may have a support plate-contact portion 217 formed between the peri-busbar joining portion 213 and the peripheral joining portion 216 and brought into surface-to-surface contact with the rectangular frame 251. The second film layer 230 for the busbar assembly 200 may have a support plate-contact portion 241 formed between the peri-busbar joining portion 237 and the peripheral joining portion 239 and brought into surface-to-surface contact with the rectangular frame 251.

Since the rectangular frame 251 of the support plate 250 is enclosed by the peri-busbar joining portions 213, 237 and the peripheral joining portions 216, 239, the support plate 250 can be prevented from being separated or detached from the support film 201 or from being out of place or out of position on the support film 201. The second film layer 230 for the busbar assembly 200 may be formed with a flange-penetration hole 247 through which the flange 257 of the support plate 250 passes.

The battery module 100 may further include a pair of end plates 120. The pair of end plates 120 may be spaced apart from each other to cover a frontmost battery cell 101 and a rearmost battery cell 101 among the plurality of battery cells 101 arranged in the first direction.

Respective left ends of the pair of end plates 120 may be coupled and secured to opposite longitudinal ends 252 of the support plate 250 of a left busbar assembly 200 among the pair of busbar assemblies 200, and respective right ends of the pair of end plates 120 may be coupled and secured to opposite longitudinal ends 252 of the support plate 250 of a right busbar assembly 200 among the pair of busbar assemblies 200.

As described above, the battery module 100 includes the busbar assembly 200 including the busbars 260, 273, the support film 201 supporting the busbars 260, 273, and the support plate 250 supporting the support film 201. As a result, use of a busbar holder formed of a metal to support the busbars 260, 273 can be eliminated, thereby reducing costs associated therewith, improving assembly productivity, and allowing the battery module 100 to be miniaturized and lightweight.

Furthermore, with the flexible support film 201 supporting the busbars 260, 273, the tolerance between the busbars 260, 273 and the cell terminals 110, 111 for joining the busbars 260, 273 to the cell terminals 110, 111 can be increased. As a result, welding failure between the busbars 260, 273 and the cell terminals 110, 111 can be reduced and the yield of high-quality battery module products can be enhanced.

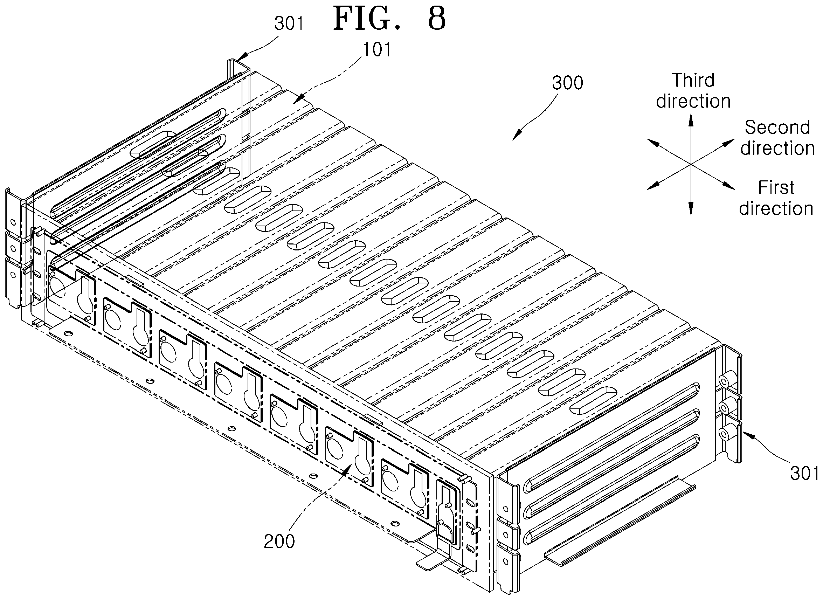

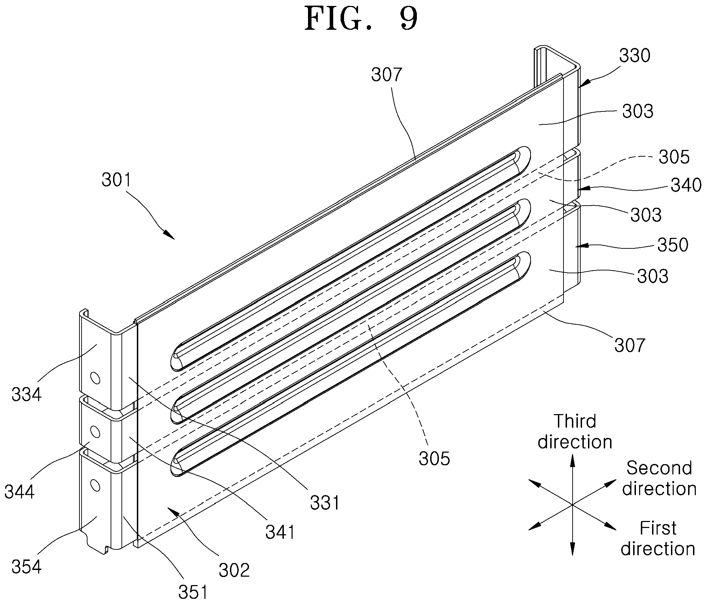

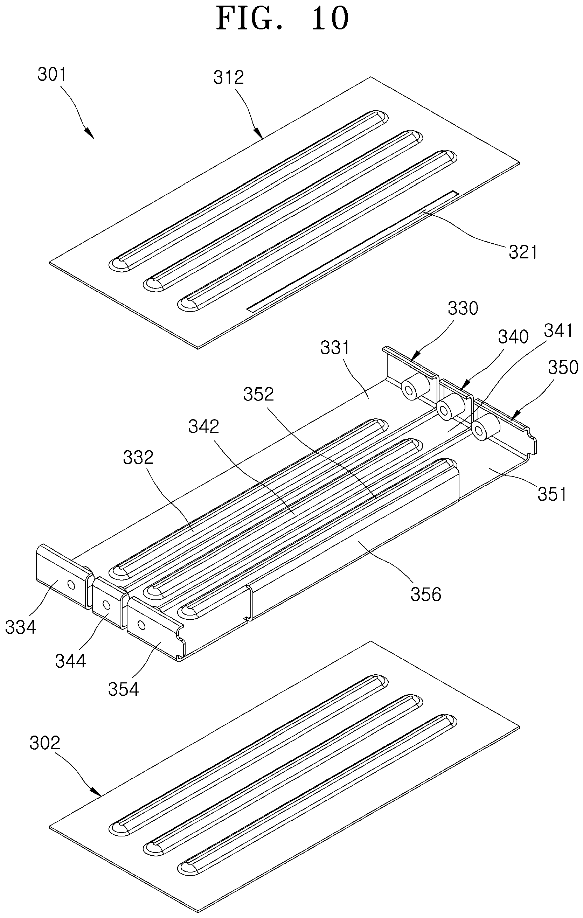

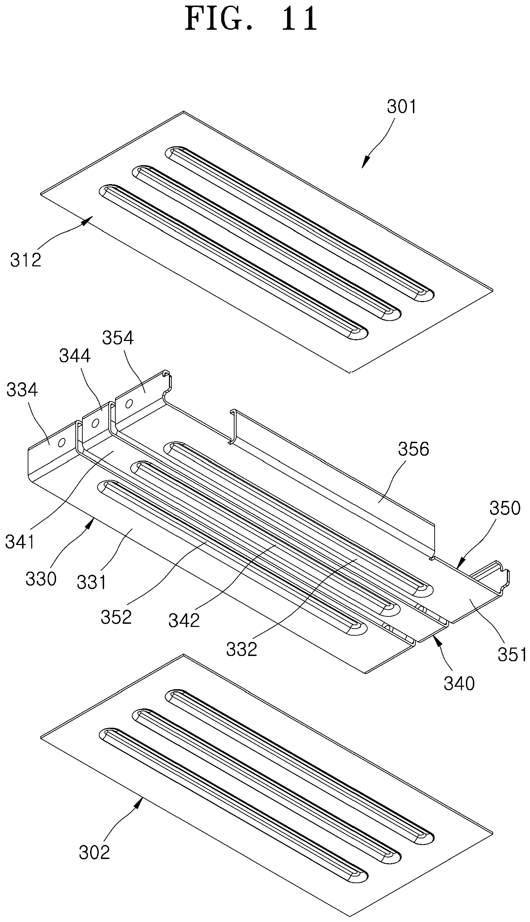

FIG. 8 is a perspective view of a battery module according to a second embodiment of the present invention; FIG. 9 is an inside perspective view of an end plate assembly of FIG. 8; FIG. 10 is a top exploded perspective view of the end plate assembly of FIG. 8; and FIG. 11 is a bottom exploded perspective view of the end plate assembly of FIG. 8.

Referring to FIG. 8 to FIG. 11, a battery module 300 according to a second embodiment of the present invention includes a plurality of battery cells 101, a busbar assembly 200, and an end plate assembly 301. Since the plurality of battery cells 101 and the busbar assembly 200 are the same as those of the battery module 100 according to the first embodiment, repeated description thereof will be omitted.

The end plate assembly 301 covers an outermost battery cell 101 among the plurality of battery cells 101. For example, the end plate assembly 301 may include a pair of end plate assemblies. The pair of end plate assemblies 301 may be spaced apart from each other to cover a frontmost battery cell 101 and a rearmost battery cell 101 among the plurality of battery cells 101 arranged in the first direction.

Respective left ends of the pair of end plate assemblies 301 may be coupled and secured to opposite longitudinal ends 252 of a support plate 250 of a left busbar assembly 200 among the pair of busbar assemblies 200, and respective right ends of the pair of end plate assemblies 301 may be coupled and secured to opposite longitudinal ends 252 of a support plate 250 of a right busbar assembly 200 among the pair of busbar assemblies 200.

Each of the pair of end plate assemblies 301 may include a plurality of plate pieces 330, 340, 350, a first film layer 302 for the end plate assembly 301, and a second film layer 312 for the end plate assembly 301. For example, there may be three plate pieces 330, 340, 350.

Among the plurality of plate pieces 330, 340, 350, a first plate piece 330 may be disposed uppermost, a third plate piece 350 may be disposed lowermost, and a second plate piece 340 may be disposed between the first plate piece 330 and the third plate piece 350. The plurality of pieces 330, 340, 350 may be spaced apart from each other.

Each of the plurality of plate pieces 330, 340, 350 may include a base portion 331; 341; 351 extending in the second direction and a pair of bent portions 334; 344; 354 bent from opposite longitudinal ends of the base portion 331; 341; 351 to protrude in the first direction. The pair of bent portions 334; 344; 354 may be coupled to respective ends 255 of the pair of support plates 250 in the first direction.

The base portion 331; 341; 351 may be formed with a rib 332; 342; 352 to reinforce rigidity. The third plate piece 350 may further include a flange portion 356 protruding from the base portion 351 in the first direction.

The first film layer 302 for the end plate assembly 301 may support the plurality of plate pieces 330, 340, 350. The second film layer 312 for the end plate assembly 301 may be laid over and joined to the first film layer 302 for the end plate assembly 301 with the plurality of plate pieces 330, 340, 350 interposed between the second film layer 312 for the end plate assembly 301 and the first film layer 302 for the end plate assembly 301.

The first film layer 302 for the end plate assembly 301 and the second film layer 312 for the end plate assembly 301 laid over and joined to each other form a support film for the end plate assembly that supports the plurality of plate pieces 330, 340, 350. Each of the first film layer 302 for the end plate assembly 301 and the second film layer 312 for the end plate assembly 301 may be formed of, for example, polyethylene terephthalate (PET).

The first film layer 302 for the end plate assembly 301 and the second film layer 312 for the end plate assembly 301 may be joined to each other by hot pressing. The plurality of plate pieces 330, 340, 350 may be coupled to the support film for the end plate assembly by a joint between the first film layer 302 for the end plate assembly 301 and the second film layer 312 for the end plate assembly 301.

For example, the first film layer 302 for the end plate assembly 301 and the second film layer 312 for the end plate assembly 301 may be formed with respective intermediate joining portions 305, 315 joined to each other by hot pressing, wherein each of the joining portions 305, 315 is disposed between the first plate piece 330 and the second plate piece 340 and between the second plate piece 340 and the third plate piece 350.

Each of the first film layer 302 for the end plate assembly 301 and the second film layer 312 for the end plate assembly 301 may have a generally rectangular planar shape and may have the same size. The first film layer 302 for the end plate assembly 301 and the second film layer 312 for the end plate assembly 301 may extend in the second direction.

Since a width of each of the first film layer 302 for the end plate assembly 301 and the second film layer 312 for the end plate assembly 301, that is, a distance between opposite ends thereof in the third direction, is greater than a distance between an upper end of the base portion 331 of the first plate piece 330 in the third direction and a lower end of the base portion 351 of the third plate piece 350 in the third direction, the first film layer 302 for the end plate assembly 301 may be formed with a peripheral joining portion 307 in a region thereof close to an end thereof in the third direction and the second film layer 312 for the end plate assembly 301 may be formed with a peripheral joining portion 317 in a region thereof close to an end thereof in the third direction, wherein the peripheral joining portions 307, 317 are joined to each other by hot pressing.

The first film layer 302 for the end plate assembly 301 may be formed with a plate piece-contact portion 303 brought into surface-to-surface with the base portions 331, 341, 351 of the plate pieces 330, 340, 350. The second film layer 312 for the end plate assembly 301 may be formed with a plate piece-contact portion 313 brought into surface-to-surface contact with the base portions 331, 341, 351 of the plate pieces 330, 340, 350. In addition, the second film layer 312 for the end plate assembly 301 may be formed with a flange portion-penetration slit 321 through which the flange portion 356 of the third plate piece 350 passes.

In the event expansion of the plurality of battery cells 101 (see FIG. 1) during charging/discharging of the battery module 300, the end plate assembly 301 including the plurality of plate pieces 330, 340, 350 may be resiliently deformed to a relatively large extent, thereby preventing an accident such as internal fire or explosion of the battery cells 101. In other words, reliability of the battery module 300 can be improved.

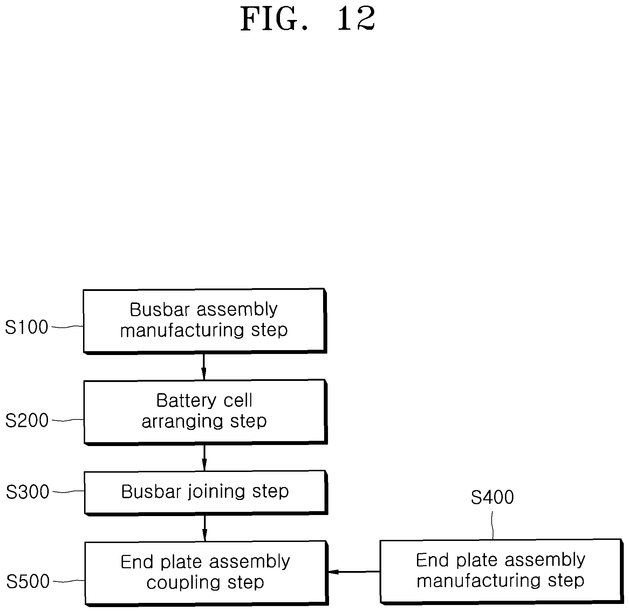

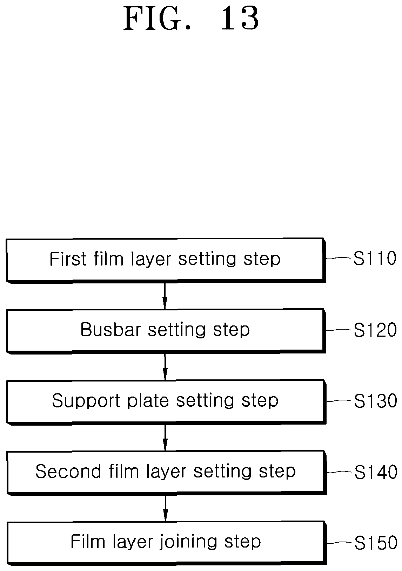

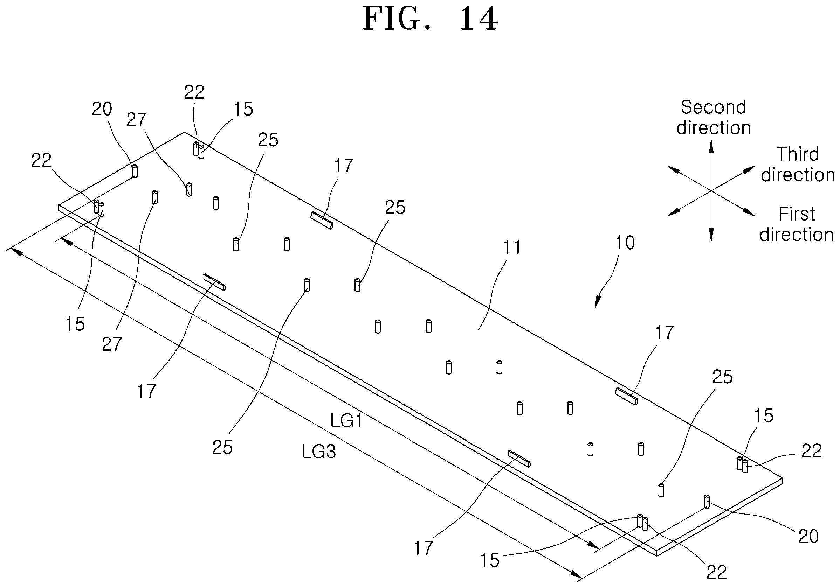

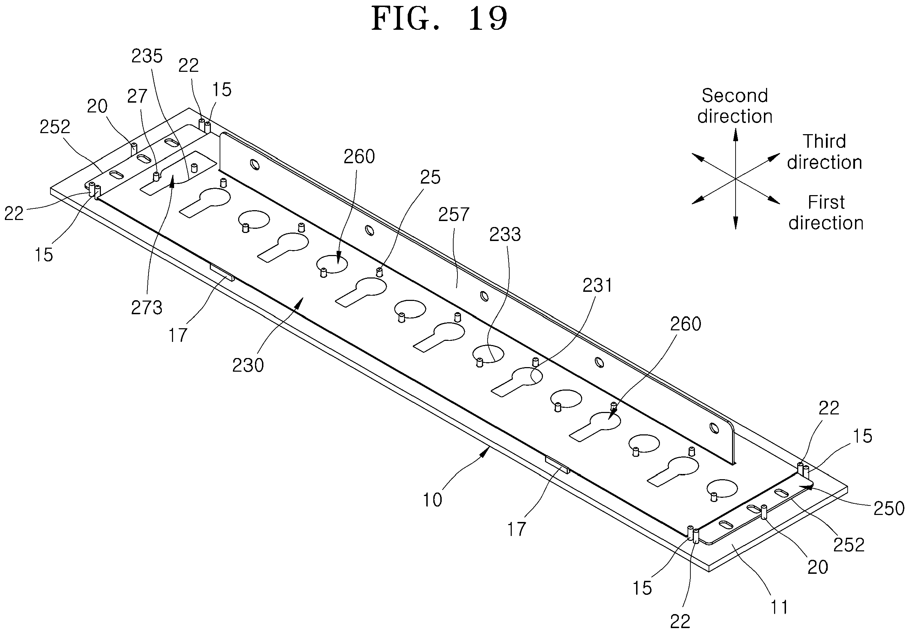

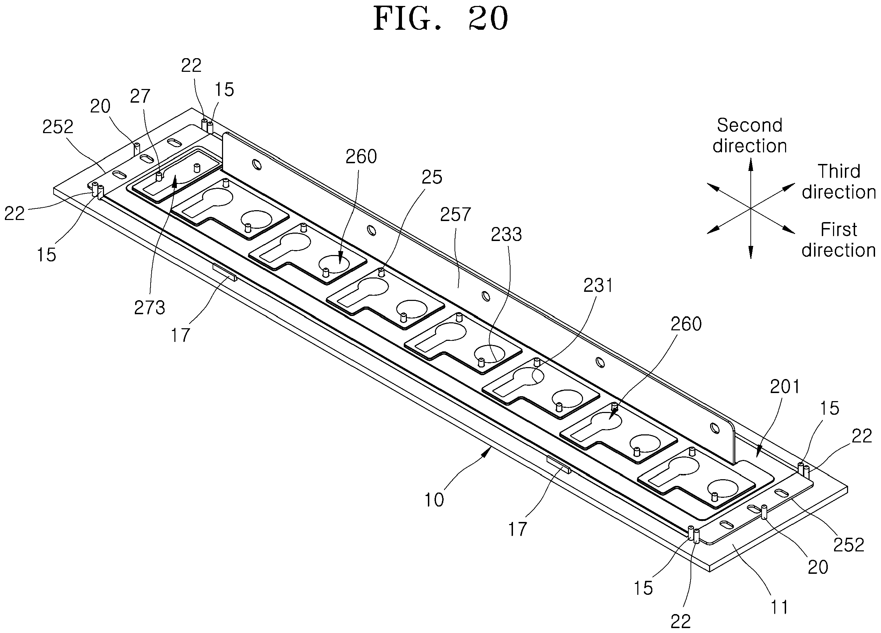

FIG. 12 is a flowchart of a battery module manufacturing method according to one embodiment of the present invention; FIG. 13 is a flowchart of one embodiment of a busbar assembly manufacturing step of FIG. 12; FIG. 14 is a perspective view of an example of a jig used in the busbar assembly manufacturing step of FIG. 12; FIG. 15 is a perspective view of the jig of FIG. 14, with a first film layer for a busbar assembly placed thereon; FIG. 16 is an enlarged plan view of portion XVI of FIG. 15; FIG. 17 is a perspective view of the jig of FIG. 14, with the first film layer for the busbar assembly, a busbar, and a support plate placed thereon; FIG. 18 is an enlarged plan view of portion XIIX of FIG. 17; FIG. 19 is a perspective view of the jig of FIG. 14, with the first film layer for the busbar assembly, the busbar, the support plate, and a second film layer for the busbar assembly placed thereon; FIG. 20 is a perspective view of the jig of FIG. 19, with the first film layer for the busbar assembly joined to the second film layer for the busbar assembly by heat pressing.

Referring to FIG. 1 to FIG. 7, FIG. 12, and FIG. 13, a battery module manufacturing method according to one embodiment of the present invention includes a busbar assembly manufacturing step S100, a battery cell arranging step S200, and a busbar joining step S300. In the busbar assembly manufacturing step S100, a busbar assembly 200 including a busbar 260, 273, a support film 201 coupled to the busbar 260, 273 to support the busbar 260, 273, and a support plate 250 coupled to the support film 201 to support the support film 201 is manufactured. Since the busbar assembly 200 has been described in detail with reference to FIG. 1 to FIG. 7, repeated description thereof will be omitted.

The busbar assembly manufacturing step S100 may include a first film layer setting step S110, a busbar setting step S120, a support plate setting step S130, a second film layer setting step S140, and a film layer joining step S150. Referring to FIG. 13 to FIG. 16, in the first film layer setting step S110, a first film layer 210 for the busbar assembly 200 is placed on a jig 10 for the busbar assembly.

The jig 10 may include: a jig base 11 having a generally rectangular plate-like shape; and a first guide pin 15 and a second guide pin 17 each protruding upwards from the jig base 11. The jig base 11 may extend in the first direction, like the first film layer 210 for the busbar assembly 200, a second film layer 230 for the busbar assembly 200, and the support plate 250.

The first film layer 210 may be placed on the jig base 11. The first guide pin 15 blocks a longitudinal end 218 of the first film layer 210 placed on the jig base 11 in the first film layer setting step S110 to prevent the first film layer 210 from sliding with respect to the jig 10 in a longitudinal direction of the first film layer 210.

There may be four first guide pins 15. Thereamong, one pair of first guide pins 15 blocks a front end 218 of the first film layer 210. The pair of first guidewires 15 blocking the front end 218 may be spaced apart from each other in the second direction. The other pair of first guide pins 15 blocks a rear end 218 of the first film layer 210. The pair of first guidewires 15 blocking the rear end 218 may be spaced apart from each other in the second direction.

The second guide pin 17 blocks a transverse end 219 of the first film layer 210 placed on the jig base 11 in the first film layer setting step S110 to prevent the first film layer 210 from sliding with respect to the jig 10 in a transverse direction of the first film layer 210.

There may be four second guide pins 17. Thereamong, one pair of second guide pins 17 blocks one end 219 of the first film layer 210 in the third direction. The pair of second guide pins 17 blocking the one end 219 of the first film layer 210 in the third direction may be spaced apart from each other in the first direction. The other pair of second guide pins 17 blocks the other end 219 of the first film layer 210 in the third direction. The pair of second guide pins 17 blocking the other end of the first film layer 210 in the third direction may be spaced apart from each other in the first direction.

A distance LG1 between a pair of first guide pins 15 spaced apart from each other in the first direction may be slightly greater than a length LF of the first film layer 210. A distance WG2 between a pair of second guide pins 17 spaced apart from each other in the third direction may be slightly greater than a width WF of the first film layer 210. When the first film layer 210 is positioned at a proper location on the jig base 11, the end 218 of the first film layer 210 in the first direction may contact the first guide pin 15, and the end 219 of the first film layer 210 in the third direction may contact the second guide pin 17.

The first guide pin 15 may have a circular shape in cross-section, whereas, the second guide pin 17 may have a rectangular or elliptical shape with a major axis extending in the first direction in cross-section. An upper end of the first guide pin 15 and an upper end of the second guide pin 17 may be tapered to ensure that, in the first film layer setting step S10, the first film layer 210 smoothly falls onto the jig base 11 while sliding with respect to the upper end of the first guide pin 15 and the second guide pin 17, and that, in the second film layer setting step S10, the second film layer 230 smoothly falls onto the jig base 11 while sliding with respect to the upper end of the first guide pin 15 and the second guide pin 17.

Referring to FIG. 7, FIG. 13, FIG. 17, and FIG. 18, in the busbar setting step S120, the busbar 260, 273 is placed on the first film layer 210. The busbar 260, 273 placed on the first film layer 210 may include a plurality of inter-cell busbars 260 and one intermediate busbar 273.

The jig 10 may further include a plurality of busbar guide pins 25, 27 protruding upwards from the jig base 11. The plurality of busbar guide pins 25, 27 guides the position of the busbar 260, 273 relative to the support plate 250 and the support film 201.

The plurality of busbar guide pins 25, 27 may include: a plurality of inter-cell busbar guide pins 25 each fitted into a corresponding one of a plurality of inter-cell busbars 260; and a pair of intermediate busbar guide pins 27 fitted into one intermediate busbar 273.

The inter-cell busbar 260 may be formed with an inter-cell busbar guide pin hole 269 into which a corresponding one of the plurality of inter-cell busbar guide pins 25 is fitted. One inter-cell busbar guide pin hole 269 may be formed at each of a first joining portion 261 and a second joining portion 263 to be distant from a region of the inter-cell busbar 260 that contacts the cell terminals 110, 111.

The intermediate busbar 273 may be formed with a pair of intermediate busbar guide pin holes 274 into which the pair of intermediate busbar guide pins 27 is inserted. The pair of intermediate busbar guide pin holes 274 may be formed to be spaced apart from each other and to be distant from a region of the intermediate busbar 273 that contacts the cell terminals 110, 111.

The busbar guide pins 25, 27 are fitted into the busbar guide pin holes 269, 274, respectively, and pass through the first film layer 210 and the second film layer 230 such that the busbar 260, 273 can be locked in position with respect to the jig 10 in the busbar setting step S120. In the first film layer setting step S120, each of the plurality of busbar guide pins 25, 27 may pass through the first film layer 210 through a corresponding one of a plurality of cell terminal-contact windows 211.

When the inter-cell busbar guide pin 25 is fitted into the inter-cell busbar guide pin hole 269 and the intermediate busbar guide pin 27 is fitted into the intermediate busbar guide pin hole 274, the inter-cell busbar 260 and the intermediate busbar 273 can be positioned on a proper location on the jig base 11.

An upper end of the inter-cell busbar guide pin 25 and an upper end of the intermediate busbar guide pin 27 may be tapered to ensure that, in the busbar setting step S120, the inter-cell busbar 260 and the intermediate busbar 273 smoothly fall onto the jig base 11 while sliding with respect to the upper end of the inter-cell busbar guide pin 25 and the upper end of the intermediate busbar guide pin 27.

In the support plate setting step S130, the support plate 250 is placed on the first film layer 210. The jig 10 further includes a third guide pin 20 and a fourth guide pin 22 each protruding upwards from the jig base 11. The third guide pin 20 blocks a longitudinal end 252 of the support plate 250 in the support plate setting step S130 to prevent the support plate 250 from sliding with respect to the jig 10 in a longitudinal direction of the support plate 250.

There may be a pair of third guide pins 20. The pair of third guide pins 20 may be spaced apart from the first film layer 210 placed on the jig base 11. The pair of third guide pins 20 is disposed to block a front end 252 and a rear end of the support plate 250 in the first direction.

The fourth guide pin 22 blocks a transverse end 254 of the support plate 250 in the support plate setting step S130 to prevent the support plate 250 from sliding with respect to the jig 10 in a transverse direction of the support plate 250.

There may be four fourth guide pins 22. The four fourth guide pins 22 may be spaced apart from the first film layer 210 placed on the jig base 11. Among the four fourth guide pins 22, one pair of fourth guide pins 22 may block one end 254 of the support plate 250 in the third direction.

The other pair of fourth guide pins 22 may block the other end 254 of the support plate 250 in the third direction. The four fourth guide pins 22 correspond one-to-one to the four first guide pins 15. Each of the fourth guide pins 22 may be adjacent to a corresponding one of the first guide pins 15.

A distance LG3 between a pair of third guide pins 20 spaced apart from each other in the first direction may be slightly greater than a length LP of the support plate 250. A distance WG4 between a pair of fourth guide pins 22 spaced apart from each other in the third direction may be equal to a distance WG1 between a pair of first guide pins 15 spaced apart from each other in the third direction and may be slightly greater than a width WP of the support plate 250. A position of the third guidewire 20 in the third direction may lie halfway between the pair of first guide pins 15 or the pair of fourth guidewires 22 spaced apart from each other in the third direction.

When the support plate 250 is positioned at a proper location on the first film layer 210, an end 252 of the rectangular frame 251 in the first direction may contact the third guide pin 20 and an end of the rectangular frame 251 in the third direction may contact both the first guide pin 15 and the fourth guide pin 22. In addition, a plurality of inter-cell busbars 260 and one intermediate busbar 273 may be disposed in a region defined by a busbar window 258 without contacting an inner surface of the rectangular frame 251.

Each of the third guide pin 20 and the fourth guide pin 22 may have a circular shape in cross-section. An upper end of the third guide pin 20 and an upper end of the fourth guide pin 22 may be tapered to ensure that, in the support plate setting step S130, the support plate 250 smoothly falls onto the jig base 11 while sliding with respect to the upper end of the third guide pin 20 and the upper end of the fourth guide pin 22.

Although the busbar setting step S120 is shown as being performed prior to the support plate setting step S130 in FIG. 13, this is merely illustrative and the support plate setting step S130 may be performed prior to the busbar setting step S120.

Referring to FIG. 13 and FIG. 19, in the second film layer setting step S140, the second film layer 230 for the busbar assembly 200 is placed on the jig 10 to cover the first film layer 210, the busbar 260, 273, and the support plate 250. The second film layer 230 may be formed with: a plurality of busbar guide pin holes 245 into which the plurality of inter-cell busbar guide pins 25 is fitted; and a flange-penetration slit 247 into which the flange 257 of the support plate 250 is fitted.

When the second film layer 230 is placed on the plurality of busbars 260, 273 and the rectangular frame 251 such that the plurality of inter-cell busbar guide pins 25 is fitted into the plurality of busbar guide pin holes 245, respectively, and the flange 257 is fit into the flange-penetration slit 247, the second film layer 230 can be positioned at a proper location on the jig 10. Here, the pair of intermediate busbar guide pins 27 may pass through the second film layer 250 through a third welding window 235 of the second film layer 250.

Referring to FIG. 13 and FIG. 20, in the film layer joining step S150, the first film layer 210 is joined to the second film layer 230 to form a support film 201 with the busbar 260, 273 and the support plate 250 coupled thereto. The film layer joining step S150 may include a heat pressing step in which the first film layer 210 and the second film layer 230 are heated to be melted and joined together while being pressed against each other.

As shown in FIG. 20, the heat pressing step may be performed with the first film layer 210, the second film layer 230, the support plate 250, and the plurality of busbars 260, 273 placed on the jig 10. Alternatively, the heat pressing step may be performed after removal of the first film layer 210, the second film layer 230, the support plate 250, and the plurality of busbars 260, 273 from the jig 10.

Referring to FIG. 1, FIG. 2, and FIG. 12, in the battery cell arranging step S200, a plurality of battery cells 101 is arranged in one direction such that a cell terminal 110, 111 faces the busbar 260, 273. For example, the plurality of battery cells 101 may be arranged in the first direction such that the plurality of busbars 260, 273 of the busbar assembly 200 extending in the first direction faces the cell terminal 110, 111 protruding from a second surface 105 of each of the plurality of battery cells 101.

In the busbar joining step S300, the busbar 260, 273 is joined to the cell terminals 110, 111. A plurality of busbars 260, 273 may be joined to a plurality of cell terminals 110, 111. The busbar joining step S300 may be performed by, for example, laser welding. The busbar joining step S300 may include a busbar pressing step and a laser irradiation step.

In the busbar pressing step, the busbar assembly 200 is moved to be close to the plurality of battery cells 101 such that the busbar 260, 273 is brought into close contact with the cell terminal 110, 111 through a cell terminal-contact window 211. In the laser irradiation step, a laser beam is applied to the surface of the busbar 260, 273 exposed through the welding window 231, 233, 235. In the laser irradiation step, energy of the laser beam may cause the busbar 260, 273 and the cell terminal 110, 111 to be partially melted and joined together.

Since the battery module 100 includes a pair of busbar assemblies 200, each of the battery cell arranging step S200 and the busbar joining step S300 may be performed once each for a plurality of cell terminals 110, 111 arranged in the first direction at the left side of the plurality of battery cells 101 and a plurality of cell terminals 110, 111 arranged in the first direction at the right side of the plurality of battery cells 101, that is, may be performed a total of two times.

The battery module manufacturing method according to the present invention may further include an inter-module busbar joining step. In the inter-module busbar joining step, the inter-module busbar 276 may be joined to the intermediate busbar 273 through the third welding window 235. The inter-module busbar joining step may also be performed by laser welding, like the busbar joining step S300.

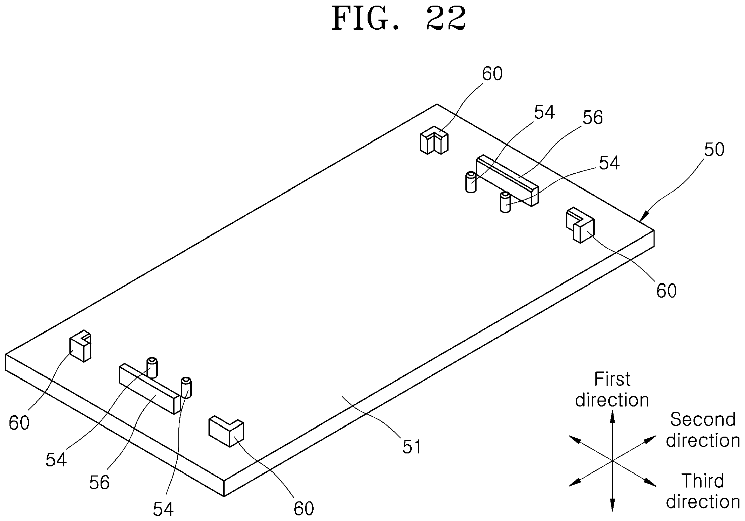

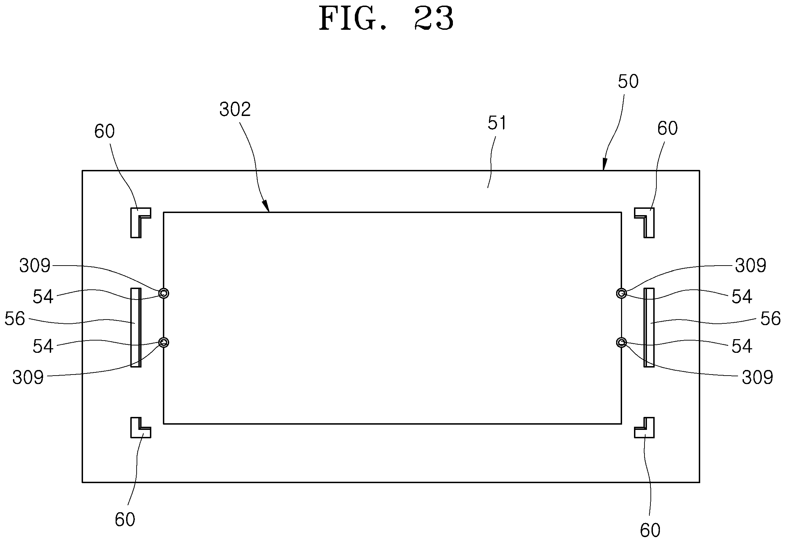

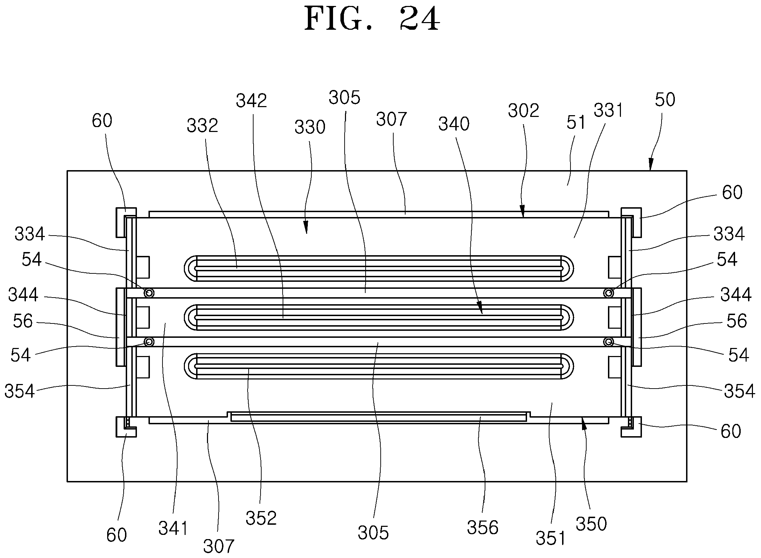

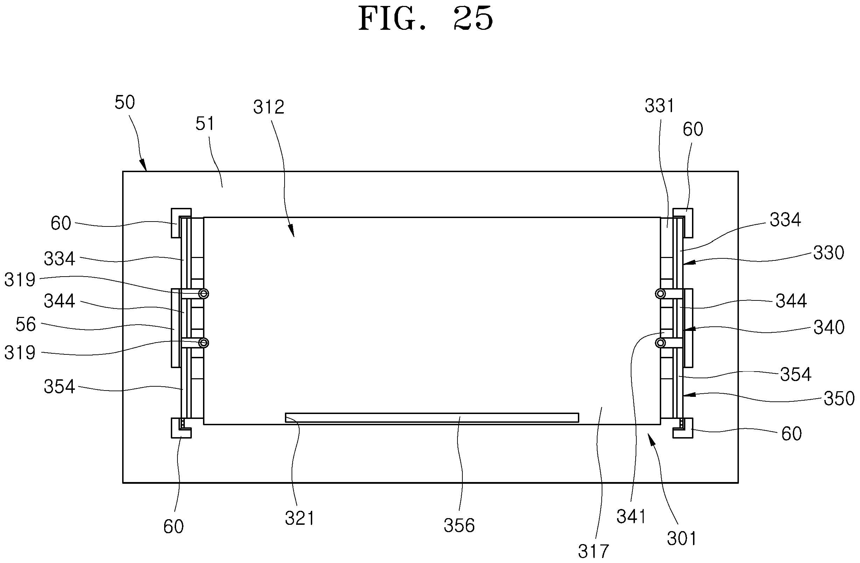

Referring FIG. 8 to FIG. 12 and FIG. 21 to FIG. 26, the battery module manufacturing method according to the present invention may further include an end plate assembly manufacturing step S400 and an end plate assembly coupling step S500.

In the end plate assembly manufacturing step S400, an end plate assembly 301 including a plurality of plate pieces 330, 340, 350, a first film layer 302 for the end plate assembly 301, and a second film layer 312 for the end plate assembly 301 is manufactured. In the end plate assembly coupling step S500, the end plate assembly 301 is coupled to the busbar assembly 200.

The end plate assembly manufacturing step S400 may include a first film layer setting step S510, a plate piece setting step S520, a second film layer setting step S530, and a film layer joining step S540.

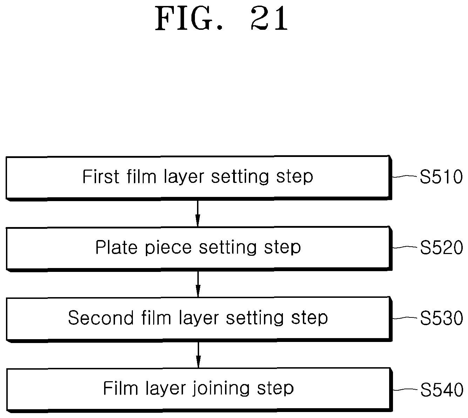

Referring to FIG. 21 to FIG. 23, in the first film layer setting step 510, the first film layer 302 for the end plate assembly 301 is placed on a jig 50 for the end plate assembly 50.

The jig 50 may include: a jig base 51 having a generally rectangular plate-like shape; and a first guide 54, a second guide 56, and a third guide 60 each protruding upwards from the jig base 51. The jig base 51 may extend in the second direction, like the first film layer 302 and the second film layer 312.

The first film layer 302 may be placed on the jig base 51. The first guide 54 blocks both opposite ends of the first film layer 302 in the second direction upon placing the first film layer 302 on the jig base 51 in the first film layer setting step S510 to prevent the first film layer 302 from sliding with respect to the jig 50 in the second direction. For example, the opposite ends of the first film layer 302 in the second direction may be right and left ends of the first film layer 302.

There may be four first guides 54. Thereamong, one pair of first guides 54 blocks the left end of the first film layer 302. The other pair of first guides 54 blocks the right end of the first film layer 302. The pair of first guides 54 blocking the left end of the first film layer 302 may be spaced apart from each other in the third direction, and the pair of first guides 54 blocking the right end of the first film layer 302 may be spaced apart from each other in the third direction.

The first film layer 302 may be formed at both right and left ends thereof with a guide seating groove 309 recessed to allow the first guide 54 to be seated thereon. When the first guide 54 is seated on the guide seating groove 309, the first film layer 302 can also be prevented from being unintentionally moved in the third direction on the jig base 51.

The second guide 56 blocks an end of each of the plurality of plate pieces 330, 340, 350 in the second direction in the plate piece setting step S520 to prevent the plurality of plate pieces 330, 340, 350 from sliding with respect to the first film layer 302.

There may be a pair of second guides 56. One of the pair of second guides 56 may block a left end of each of respective base portions 331, 341, 351 of the plurality of plate pieces 330, 340, 350. The other of the pair of second guides 56 may block a right end of each of the respective base portions 331, 341, 351 of the plurality of plate pieces 330, 340, 350. Each of the pair of second guides 56 may extend in the third direction.

The third guide 60 blocks an end of each of the first plate piece 330 and the third plate piece 350 in both the first direction and the second direction in the plate piece setting step S520 to prevent the first plate piece 330 and the third plate piece 350 from sliding with respect to the first film layer 302. There may be four third guides 60. Each of the third guides 60 may have an "L" shape in plan view.

One of the four third guides 60 may block an upper left corner of the base portion 331 of the first plate piece 330. Another of the four third guides 60 may block an upper right corner of the base portion 331 of the first plate piece 330. A third of the four third guides 60 may block a lower left corner of the base portion 351 of the third plate piece 350. The rest one of the four third guides 60 may block a lower right corner of the base portion 351 of the third plate piece 350.

Referring to FIG. 21, FIG. 22, and FIG. 24, in the plate piece setting step S520, the plurality of plate pieces 330, 340, 350 is placed on the first film layer 302. The plurality of plate pieces 330, 340, 350 may be placed on the first film layer 302 such that the base portions 331, 341, 351 thereof contact the first film layer 302 and the bent portions 334, 344, 354 thereof protrude in the first direction.

For example, with the first plate piece 330 placed on the first film layer 302, the upper left corner of the base portion 331 of the first plate piece 330 may contact one third guide 60 disposed at an upper left end of the jig base 51, and the upper right corner of the base portion 331 of the first plate piece 330 may contact another third guide 60 disposed at an upper right end of the jig base 51.

In addition, the lower left corner of the base portion 331 of the first plate piece 330 may contact both a second guide 56 disposed at the left side of the jig base 51 and an upper first guide 54 among the pair of first guides 54 disposed at the left side of the jig base 51.

In addition, the lower right corner of the base portion 331 of the first plate piece 330 may contact both a second guide 56 disposed at the right side of the jig base 51 and an upper first guide 54 among the pair of first guides 54 disposed at the right side of the jig base 51. As a result, the first plate piece 330 can be prevented from being unintentionally moved on the first film layer 302 in both the second direction and the third direction.

With the third plate piece 350 placed on the first film layer 302, the lower left corner of the base portion 351 of the third plate piece 350 may contact one third guide 60 disposed at a lower left end of the jig base 51, and the lower right corner of the base portion 351 of the third plate piece 350 may contact another third guide 60 disposed at a lower right end of the jig base 51.

In addition, the upper left corner of the base portion 351 of the third plate piece 350 may contact both a second guide 56 disposed at the left side of the jig base 51 and a lower first guide 54 among the pair of first guides 54 disposed at the left side of the jig base 51.

In addition, the upper right corner of the base portion 351 of the third plate piece 350 may contact both a second guide 56 disposed at the right side of the jig base 51 and a lower first guide 54 among the pair of first guides 54 disposed at the right side of the jig base 51. As a result, the third plate piece 350 can be prevented from being unintentionally moved on the first film layer 302 in both the second direction and the third direction.

With the second plate piece 340 placed on the first film layer 302, the upper left corner of the base portion 341 of the second plate piece 340 may contact both one second guide 56 disposed at the left side of the jig base 51 and an upper first guide 54 among the pair of first guides 54 disposed at the left side of the base 51, and the upper right corner of the base portion 341 may contact both one second guide 56 disposed at the right side of the jig base 51 and an upper first guide 54 among the pair of first guides 54 disposed at the right side of the base 51.

In addition, the lower left corner of the base portion 341 of the second plate piece 340 may contact both one second guide 56 disposed at the left side of the jig base 51 and a lower first guide 54 among the pair of first guides 54 disposed at the left of the base 51, and the lower right corner of the base portion 341 may contact both one second guide 56 disposed at the right side of the base 51 and a lower first guide 54 among the pair of first guides 54 disposed at the right side of the base 51.

As a result, the second plate piece 340 can be prevented from being unintentionally moved on the first film layer 302 in both the second direction and the third direction. The first plate piece 330 may be spaced apart from the second plate piece 340 by a distance corresponding to the width of the first guide 54 in the third direction, and the second plate piece 340 may be spaced apart from the third plate piece 350 by a distance corresponding to the width of the first guide 54 in the third direction.

Referring to FIG. 21, FIG. 22, and FIG. 25, in the second film layer setting step S530, the second film layer 312 for the end plate assembly 301 is placed on the jig 50 to cover the first film layer 302 and the plurality of plate pieces 330, 340, 350.

The first guide 54 blocks right and left ends of the second film layer 312 in the second direction upon placing the second film layer 312 on the jig base 51 of the jig 50 in the second film layer setting step S530 to prevent the second film layer 312 from sliding with respect to the jig 50 in the second direction.

The second film layer 312 may be formed at both the right and left ends thereof with a guide seating groove 319 recessed to allow the first guide 54 to be seated thereon. When the first guide 54 is seated on the guide seating groove 319, the second film layer 312 can also be prevented from being unintentionally moved in the third direction on the base 51.

In the second film layer setting step S530, a flange portion 356 of the third plate piece 350 may pass through a flange portion-penetration slit 321.

Referring to FIG. 21, FIG. 22, and FIG. 26, in the film layer joining step S540, the first film layer 302 and the second film layer 312 are joined to each other to couple the plurality of plate pieces 330, 340, 350 to the first film layer 302 and the second film layer 312.

The film layer joining step S540 may include a heat pressing step in which the first film layer 302 and the second film layer 312 are heated to be melted and joined together while being pressed against each other.

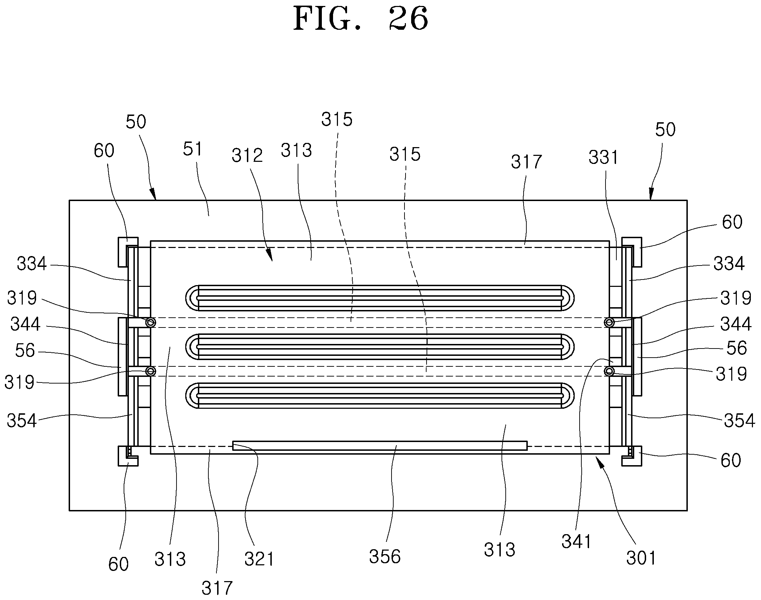

The heat pressing step may be performed with the first film layer 302, the plurality of plate pieces 330, 340, 350, and the second film layer 312 placed on the jig base 51 of the jig 50, as shown in FIG. 26, or may be performed after removal of the first film layer 302, the plurality of plate pieces 330, 340, 350, and the second film layer 312 from the jig 50.

Referring to FIG. 8 and FIG. 12, the end plate assembly coupling step S500 may include securely coupling a pair of end plate assemblies 301 to opposite longitudinal ends of each of the pair of busbar assemblies 200. Here, both ends 255 of the support plate 250 may be securely coupled to the bent portions 334, 344, 354 of the plurality of plate pieces 330, 340, 350 using a fastener, such as a bolt and nut.

According to embodiments of the present invention, a battery module includes a busbar assembly including a busbar, a support film supporting the busbar, and a support plate supporting the support film. Thus, use of a busbar holder formed of a metal to support the busbar can be eliminated, thereby reducing costs associated therewith, improving assembly productivity, and allowing the battery module to be miniaturized and lightweight.

Furthermore, with the flexible support film supporting the busbar, the tolerance between the busbar and cell terminals for joining the busbar to the cell terminals can be increased. As a result, welding failure between the busbar and the cell terminals can be reduced and the yield of high-quality battery module products can be enhanced.

However, aspects and features of the present invention are not limited to those described above and other aspects and features not mentioned will be clearly understood by those skilled in the art from the detailed description given below.

According to embodiments of the present invention, a battery module includes a busbar assembly including a busbar, a support film supporting the busbar, and a support plate supporting the support film. Thus, use of a busbar holder formed of a metal to support the busbar can be eliminated, thereby reducing costs associated therewith, improving assembly productivity, and allowing the battery module to be miniaturized and lightweight.

With the flexible support film supporting the busbar, the tolerance between the busbar and cell terminals for joining the busbar to the cell terminals can be increased. As a result, welding failure between the busbar and the cell terminals can be reduced and the yield of high-quality battery module products can be enhanced.

Although the present invention has been described with reference to some embodiments and drawings illustrating aspects thereof, the present invention is not limited thereto. Various modifications and variations can be made by a person skilled in the art to which the present invention belongs within the scope of the invention and the claims and equivalents thereto.

## Claims

1. A battery module (100) comprising:
a plurality of battery cells (101) arranged in a first direction and each comprising a cell case (102) and a cell terminal (110, 111) protruding from the cell case (102); and
a busbar assembly (200) comprising
a busbar (260, 273, 276) to allow electrical connection between respective cell terminals (110, 111) of at least one pair of battery cells (101) among the plurality of battery cells (101),
a support film (201) coupled to the busbar (260, 273, 276) to support the busbar (260, 273, 276), and
a support plate (250) coupled to the support film (201) to support the support film (201).

2. The battery module (100) as claimed in claim 1, wherein the support film (201) comprises: a first film layer (210) for the busbar assembly (200); and a second film layer (230) for the busbar assembly (200), the second film layer (230) being arranged over the first film layer (210) and located farther away from the plurality of battery cells (101) than the first film layer (210).

3. The battery module (100) as claimed in claim 2, wherein the busbar (260, 273, 276) and the support plate are between the first film layer (210) and the second film layer (230), and/or wherein:
the battery module is formed such that the first film layer (210) is joined to the second film layer (230) by hot pressing; and
the busbar (260, 273, 276) and the support plate are coupled to the support film (201) by a joint between the first film layer (210) and the second film layer (230).

4. The battery module (100) as claimed in claim 2 or 3, wherein the support plate (250) comprises a busbar window (258) such that the support plate does not cover the busbar (260, 273, 276), and/or. wherein the first film layer (210) comprises a cell terminal-contact window (211) that is open to allow contact between the busbar (260, 273, 276) and the cell terminals (110, 111).

5. The battery module (100) as claimed in any of claims 2 to 4, wherein the second film layer (230) comprises a welding window (231, 233, 235) that is open to allow energy for welding the busbar (260, 273, 276) to the cell terminals (110, 111) to be transferred to the busbar (260, 273, 276) across the second film layer (230).

6. The battery module (100) as claimed in any of the preceding claims, wherein the busbar (260, 273, 276) comprises a busbar guide pin hole (245, 269, 274) into which a busbar guide pin (25, 27) is configured to be fitted to guide a position of the busbar (260, 273, 276) relative to the support plate (250) and the support film (201).

7. The battery module (100) as claimed in any of the preceding claim, wherein each of the plurality of battery cells (101) comprises a pair of cell terminals (110, 111), the pair of cell terminals (110, 111) protruding from the cell case (102) in directions opposite to each other and intersecting a direction in which the plurality of the battery cells (101) is arranged, and/or wherein the busbar assembly (200) comprises a pair of busbar assemblies, the pair of busbar assemblies covering the cell terminals (110, 111) and spaced apart from each other with the plurality of battery cells (101) placed therebetween.

8. The battery module (100) as claimed in any of the preceding claims, wherein the busbar (260, 273, 276) comprises:
a first joining portion (261) joined to the cell terminal (110, 111) of one battery cell (101) among the plurality of battery cells (101);
a second joining portion (263) joined to the cell terminal (110, 111) of another battery cell (101) among the plurality of battery cells (101); and
an intermediate portion (265) electrically connecting the first joining portion (261) to the second joining portion (263) and deformable before the first joining portion (261) and the second joining portion (263) are deformed when an external force is applied to the busbar (260, 273, 276).

9. The battery module (300) as claimed in any of the preceding claims, further comprising:
an end plate assembly (301) covering an outermost battery cell (101) among the plurality of battery cells (101),
wherein the end plate assembly (301) comprises:
a plurality of plate pieces (330, 340, 350) spaced apart from each other; and
a first film layer (302) for the end plate assembly (301), the first film layer (302) supporting the plurality of plate pieces (330, 340, 350); and
a second film layer (312) for the end plate assembly (301), the second film layer (312) being arranged over and joined to the first film layer (302) with the plurality of plate pieces (330, 340, 350) interposed between the first film layer (302) and the second film layer (312).

10. A method for manufacturing the battery module (100, 300) claimed in any of the preceding claims, comprising:
manufacturing a busbar assembly (200) comprising a busbar (260, 273, 276), a support film (201) coupled to the busbar (260, 273, 276) to support the busbar (260, 273, 276), and a support plate coupled to the support film (201) to support the support film (201);
arranging a plurality of battery cells (101) each comprising a cell case (102) and a cell terminal (110, 111) protruding from the cell case (102) such that the cell terminals (110, 111) face the busbar (260, 273, 276); and
joining the busbar (260, 273, 276) to the cell terminals (110, 111).

11. The method as claimed in claim 10, wherein:
the support film (201) comprises a first film layer (210) for the busbar assembly (200) and a second film layer (230) for the busbar assembly (200), the second film layer (230) being arranged over the first film layer (210); and
the busbar (260, 273, 276) and the support plate are interposed between the first film layer (210) and the second film layer (230), and/or. wherein the step of manufacturing a busbar assembly (200) comprises:
a first film layer setting step in which the first film layer (210) is placed on a jig (10) for the busbar assembly (200);
a busbar (260, 273, 276) setting step in which the busbar (260, 273, 276) is placed on the first film layer (210);
a support plate setting step in which the support plate is placed on the first film layer (210);
a second film layer (230) setting step in which the second film layer (230) is placed on the jig (10) to cover the first film layer (210), the busbar (260, 273, 276), and the support plate; and
a film layer joining step in which the first film layer (210) is joined to the second film layer (230) to form a support film (201) with the busbar (260, 273, 276) and the support plate coupled thereto.

12. The method as claimed in claim 11, wherein:
the first film layer (210) extends in a direction in which the plurality of battery cells (101) is arranged; and
the jig (10) comprises:
a first guide pin blocking a longitudinal end (219, 254, 255) of the first film layer (210) in the first film layer setting step to prevent the first film layer (210) from sliding with respect to the jig (10) in a longitudinal direction of the first film layer (210); and
a second guide pin (17) blocking a transverse end (244) of the first film layer (210) in the first film layer setting step to prevent the first film layer (210) from sliding with respect to the jig (10) in a transverse direction of the first film layer (210).

13. The method as claimed in claim 11 or 12, wherein:
the support plate extends in a direction in which the plurality of battery cells (101) is arranged; and
the jig (10) further comprises:
a third guide (60) pin spaced apart from the first film layer (302) and blocking a longitudinal end (219, 254, 255) of the support plate in the support plate setting step to prevent the support plate from sliding with respect to the jig (10) in a longitudinal direction of the support plate; and
a fourth guide pin spaced apart from the first film layer (210) and blocking a transverse end (244) of the support plate in the support plate setting step to prevent the support plate from sliding with respect to the jig (10) in a transverse direction of the support plate, and/or
wherein the busbar (260, 273, 276) comprises a busbar guide pin hole (245, 269, 274); and
the jig (10) further comprises:
a busbar guide pin (25, 27) fitted into the busbar guide pin hole (245, 269, 274) and passing through both the first film layer (210) and the second film layer (230) to allow the busbar (260, 273, 276) to be locked in position with respect to the jig (10) in the busbar (260, 273, 276) setting step.

14. The method as claimed in claim 10, further comprising:
manufacturing an end plate assembly (301) comprising a plurality of plate pieces (330, 340, 350) spaced apart from each other, a first film layer (302) for the end plate assembly (301), the first film layer (302) supporting the plurality of plate pieces (330, 340, 350), and a second film layer (312) for the end plate assembly (301), the second film layer (312) being laid over and joined to the first film layer (302) with the plurality of plate pieces (330, 340, 350) interposed between the first film layer (302) and the second film layer (312); and
coupling the end plate assembly (301) to the busbar assembly (200).

15. The method as claimed in claim 14, wherein the step of manufacturing an end plate assembly (301) comprises:
a first film layer setting step (510) in which the first film layer (302) is placed on a jig (10) for the end plate assembly (301);
a plate piece (330, 340, 350) setting step in which the plurality of plate pieces (330, 340, 350) is placed on the first film layer (302);
a second film layer (312) setting step in which the second film layer (312) is placed on the jig (10) to cover the first film layer (302) and the plurality of plate pieces (330, 340, 350); and
a film layer joining step in which the first film layer (302) is joined to the second film layer (312) to couple the plurality of plate pieces (330, 340, 350) to the first film layer (302) and the second film layer (312).
